# EUROPEAN PATENT APPLICATION

(11) **EP 4 708 647 A1**
(43) Date of publication of application: **11.03.2026**
(21) Application number: 24884716.2
(22) Date of filing: 29.10.2024
(51) Int. Cl.: H02K 15/02

(54) **AUTOMATIC STACKING SYSTEM AND METHOD FOR STATOR CORES**

(30) Priority: 03.11.2023 CN 202311454002
(71) Applicant: Dongfang Electric Machinery Co., Ltd. of Dongfang Electric Group, Deyang, Sichuan 618000 (CN)
(72) Inventor: YANG, Tao, Deyang, Sichuan 618000 (CN); ZOU, Yingdong, Deyang, Sichuan 618000 (CN); LIAO, Bangmin, Deyang, Sichuan 618000 (CN); ZHANG, Qi, Deyang, Sichuan 618000 (CN); ZHANG, Yu, Deyang, Sichuan 618000 (CN)
(74) Representative: Herrmann, Daniel
(86) International application number: PCT/CN2024/128036
(87) International publication number: WO 2025/092713

(57) **Abstract**

The application discloses an automatic stator-core stacking system and an automatic stator-core stacking method, belonging to the field of production and manufacturing for the stator core of the generator. The system includes a stacking and positioning table, stacking robot(s), feeding mechanism(s), sheet separation mechanism(s), centering table(s), iron-sheet tray station(s) and ventilation-slotted-plate tray station(s). In the system, the separation, the centering and the stacking of the silicon steel sheets are performed in parallel, so that the stacking time of the stator core is greatly shortened, thereby improving the overall stacking efficiency. The system can realize the stacking operation of the multi-machine stator cores by replacing the positioning device of the stacking and positioning table, adjusting the position of the clamp sucker, and replacing the stacking program, thereby improving the processing and manufacturing capability of the stacking system.

## Description

### Technical Field

The present application relates to the field of production and manufacturing for the stator core of the generator, and in particular to an automatic stator-core stacking system and an automatic stator-core stacking method.

### Background

The stator core is an important part of power generation equipment, which is formed by several hundred thousands of positive sheets, iron sheets, and ventilation slotted plates (which are totally described below as punched sheets) stacked in a specific order. The quality control and the stacking efficiency in stacking process are of great significance to the comprehensive performance of products and the enterprise benefits.

In the conventional stator core manufacturing, a manual stacking process is usually used. In particular, a special stacking station is arranged in a workshop, an incoming material sheet (stacking materials are a positive sheet, an iron sheet, a ventilation slotted plate respectively) is conveyed to the outer side area of the stacking station by a truss or forklift; the sheet-separating workers separate the incoming material sheet and inspect defects of the incoming material sheet, and then the separated and inspected sheet is delivered to stacking persons located inside the stacking station one by one; and the stacking persons complete the full-circle lamination of this layer of the core one by one under the cooperation of a positioning tool, and then complete the lamination of the second layer and the third layer until the last layer. Further, when a specified height is reached by the stacking, the positioning tool is lifted by a overhead crane, and then the lamination operation is continued until the stacking operation of the unit's stator core is completed. In a practical production application scenario, the working nature has the following main characteristics.
① The workers need to manually separate all the punched sheets (the incoming materials are stacked materials, and are hundreds of thousands of pieces in total), and fully inspect the surface quality thereof; and then stacks the sheets into an integral stator core according to a specific sequence. So, the work efficiency is lower and the work belongs to a mechanical repetitive work, so that the workload is large, the work space is narrow, and the worker needs to bear the weight and bend her/his waist, and the like, which is liable to cause occupational diseases.
②Due to the technical level difference and the occupational spirit difference of the operator, it is easy to occur inaccurate the defect detection, and the non-standard operation such as excessive stacking, incorrect stacking, missing stacking, burred sheet, and scratched sheet of the punched sheet, so as cause the product quality problem, so that the error rate is higher.
③Stacking operations generally require 4-8 people to work together, and the requirements of station personnel are too high.
④The stacking method is a single-path operation in the production flow, and the production time span is long. It is necessary to occupy the stacking station to complete the stacking of the entire stator core before releasing the reconfiguration station for use by other products, which affects the workshop station scheduling.

In recent years, with the development of automation technology, few enterprises use special equipment to realize the sectional automatic stacking of stator cores.

Chinese Patent Publication No. CN106849533A, published on 2017.06.13, discloses an automatic external stacking device for a stator core of a motor, including a table, a robot, a centering table, a stacking and positioning table, and a punched sheet tray. The table is provided with a stacking and positioning table at a center of the table. The table is equally divided into three parts, and each part is provided with a robot. An end suction cup is provided at the end of the robot. The centering table, the punched sheet tray, an iron sheet tray, a waste tray, a ventilation slotted plate tray, and a compensation sheet tray are provided around the robot, so that a motion program can be pre-designed for the robot. In this way, different parameters can be selected according to different products; and as long as materials are prepared, the robot can be made to perform the operations according to a predetermined program, thereby replacing a manual monotonically repeated work. According to the method, three uniformly distributed robots are used to cooperate in sheet taking and stacking. The flow sequence is as follows: calibration and adjustment of stacking and positioning table; robot motion path planning; incoming material inspecting and feeding; secondary positioning and re-inspecting; and iron core stacking. In this solution, the operations of the material taking, the sheet separating and the stacking are all completed by the robots, and thus serial operations are performed in the time dimension, so that the time is wasted to a certain extent and the time of both punched sheets and lamination is excessively long. At the same time, the stacking and positioning table is of an integral structure, which only meets a stacking operation of the stator core of one type generator, and lacks manufacturing flexibility

### Summary

The present application is directed to solve the existing problems about technical quality. The present application is provided to an automatic stator-core stacking system and an automatic stator-core stacking method. In the system, the separation, the centering and the stacking of the silicon steel sheets are performed in parallel, so that the stacking time of the stator core is greatly shortened, thereby improving the overall stacking efficiency. The system can realize the stacking operation of the multi-machine stator cores by replacing the positioning device of the stacking and positioning table, adjusting the position of the clamp sucker, and replacing the stacking program, thereby improving the processing and manufacturing capability of the stacking system.

The object of the present application is achieved by the following technical solution.

An automatic stator-core stacking system includes a stacking and positioning table, one or more stacking robots, one or more feeding mechanisms, one or more sheet separation mechanisms, one or more centering tables, one or more iron-sheet tray stations, and one or more ventilation-slotted-plate tray stations; the stacking and positioning table is located at a center of the automatic stator-core stacking system; the stacking and positioning table, the one or more stacking robots, the one or more centering tables, the one or more sheet separation mechanisms and the one or more feeding mechanisms are arranged from inside to outside in sequence; and the iron-sheet tray station and the ventilation-slotted-plate tray station are located at two sides of the centering table;
the stacking and positioning table is configured for positioning and holding one or more stator cores;
the stacking robot is configured for picking up ventilation slotted plates and iron sheets from the ventilation-slotted-plate tray station and the iron-sheet tray station to the centering table, respectively; and the stacking robot is further configured for picking-up operation from the centering table to the stacking and positioning table, so as to complete 1/3 of a full-circle stator core stacking;
the feeding mechanism is configured for receiving a stacking material carried by an automated guided vehicle or a forklift;
the sheet separation mechanism is configured for separating and transporting silicon steel sheets at a feeding opening to the centering table;
the centering table is configured for positioning and sorting all types of punched sheets to ensure that each of the one or more stacking robots picks up from a same position;
the iron-sheet tray station is configured for holding the iron sheets; and
the ventilation-slotted-plate tray station is configured for containing the ventilation slotted plates.

Preferably, the stacking robots include three stacking robots, the feeding mechanisms include three feeding mechanisms, the sheet separation mechanisms include three sheet separation mechanisms, the centering tables include three centering tables, the iron-sheet tray stations include three iron-sheet tray stations, and the ventilation-slotted-plate tray stations include three ventilation-slotted-plate tray stations.

Preferably, an end of each of the one or more stacking robots is provided with a suction clamp.

Preferably, the stacking and positioning table includes a core holding platform, a core positioning tool and a lifting mechanism; the core holding platform is configured for holding the one or more stator cores during stacking; the core positioning tool is configured for stacking and positioning the one or more stator cores to ensure stacking accuracy of the one or more stator cores; and the lifting mechanism is configured for driving the core positioning tool to lift so as to adapt to the positioning requirement as a core stacking height changes.

Preferably, the sheet separation mechanism is provided with a visual detection system for detecting quality of the punched sheets, and a separation and detection device for separating positive sheets.

Preferably, the centering table includes an automatic centering and adjusting mechanism and a visual defect detection module; the automatic centering and adjusting mechanism is configured for sorting and positioning incoming material sheets to ensure position consistency of material picking-up points of the one or more stacking robots; and the visual defect detection device is configured for performing surface defect detection on the incoming material sheets.

Preferably, a defective-sheet tray station is in proximity to the iron-sheet tray station and configured for holding defective sheets conveyed from the centering table.

An automatic stator-core stacking method includes the steps of:
step 1, determining a stacking machine type, replacing a core positioning tool of a stacking and positioning table, and adjusting a suction clamp at an end of each of one or more stacking robots, based on a production order requirement;
step 2, placing a ventilation slotted plate tray for providing with ventilation slotted plates and a inro sheet tray for providing with iron sheets to respective tray stations; placing positive sheets at a feeding opening, placing the ventilation slotted plates in the ventilation slotted plate tray, placing the iron sheets in the iron sheet tray, and placing a defective sheet tray in a defective-sheet tray station;
step 3: starting a system, resetting data of the system, selecting a corresponding model program, and starting automatic lamination;
step 4: running the stacking robot from a home point to directly above a ventilation-slotted-plate tray station, and starting a visual position detection module integrated on the suction clamp to detect position and height information of the ventilation slotted plates;
step 5, picking up the ventilation slotted plates and placing the ventilation slotted plates on one or more centering tables by the one or more stacking robots and enabling the one or more stacking robots exit from the area, and starting defect detection function of the one or more centering tables after centering incoming material sheets through an automatic centering and adjusting mechanism; in response to defect inspection passing, picking up the ventilation slotted plates by the one or more stacking robots to the stacking and positioning table for stacking; and in response to the defect inspection not passing, picking up the ventilation slotted plates by the one or more stacking robots to the defective-sheet tray station, and repeating step 5 until the one or more stacking robots complete full-circle stacking of a layer of the ventilation slotted plates;
step 6, receiving positive sheet stacks by a feeding device, and picking up the positive sheets from the positive sheet stacks and conveying the positive sheets to the one or more centering tables by one or more sheet separation mechanisms; and centering the incoming material sheets through the automatic centering and adjusting mechanism by the centering table and then starting the defect detection function; in response to the defect inspection passing, picking up the positive sheets by the one or more stacking robots to the stacking and positioning table for stacking; and in response to the defect inspection not passing, picking up the positive sheets by the one or more stacking robots to the defective-sheet tray station; continuing next operation by the sheet separation mechanism and the centering table while the one or more stacking robots pick up the incoming material sheets from the centering table; and repeating step 6 until the one or more stacking robots complete stacking of the positive sheets of a stator core;
step 7, picking up the iron sheets and placing the iron sheets on the one or more centering tables by the one or more stacking robots and enabling the one or more stacking robots exit from the area, and starting the defect detection function of the one or more centering tables after centering the incoming material sheets through the automatic centering and adjusting mechanism; in response to the defect inspection passing, picking up the iron sheets by the one or more stacking robots to the stacking and positioning table for stacking; and in response to the defect inspection not passing, picking up the iron sheets by the one or more stacking robots to the defective-sheet tray station; and repeating step 7 until the one or more stacking robots complete full-circle stacking of a layer of the iron sheets;
step 8: repeating steps 5, 6, and 7 until a segment number of the stator core meets requirements or there is missing in tray punched sheets or the defective sheet tray is full;
step 9: in response to the stator core having a predetermined segment number, hoisting the stator core from the stacking and positioning table to perform stacking of a next group of stator cores; in response to the tray punched sheets being missed or the defective sheet tray being full, continuously stacking after reloading material or replacing the tray.

Preferably, in step 1, calibrating and adjusting the stacking and positioning table in response to producing different production objects.

Preferably, in step 6, by one or more feeding mechanisms, receiving a stacking material carried by an automated guided vehicle or a forklift.

Advantageous effects of the technical solution are as follows.
1. An automatic stator-core stacking system of the present application employs mechanized and automated equipment to accomplish stacking operations, thereby greatly reducing the personnel demands, liberating workers from repetitive labor operations and changing the workers to more comfortable equipment operators. Meanwhile, the influence of human factors on the product quality is eliminated, and the consistency of the product quality is ensured. Besides, the stacking efficiency can be effectively improved.
2. The present application provides an automatic stator-core stacking system. In the system, the separation, the centering and the stacking of the silicon steel sheets are performed in parallel, so that the stacking time of the stator core is greatly shortened, thereby improving the overall stacking efficiency. The system can realize the stacking operation of the multi-machine stator cores by replacing the positioning device of the stacking and positioning table, adjusting the position of the clamp sucker, and replacing the stacking program, thereby improving the processing and manufacturing capability of the stacking system.
3. The present application provides an automatic stator-core stacking system, in which an automatic centering and adjusting mechanism for punched sheets is added to ensure the consistency of the positions of material picking-up points of stacking robot(s) each time, thereby improving the accuracy of the punched sheets in stacking and helping to improve the stacking quality of the stator core. Meanwhile, the requirements of the system on uniformity of incoming materials and consistency of placement positions are reduced. The system can realize the stacking operation of the multi-machine stator cores by replacing the positioning device of the stacking and positioning table, adjusting the position of the clamp sucker, and replacing the stacking program, thereby improving the flexibility of the system production and the resource utilization rate.

### Brief Description of the Drawings

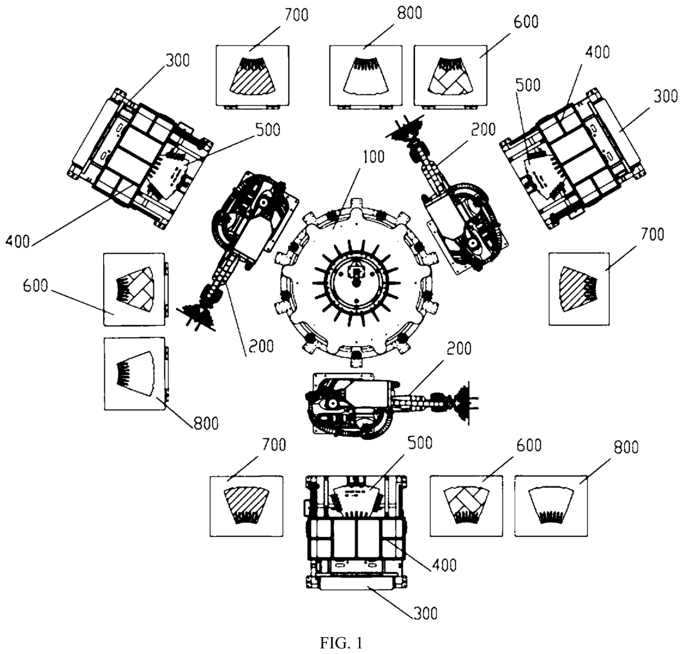

FIG. 1 is a schematic structural diagram of an automatic stator-core stacking system according to embodiments of the present application.

In figures: 100. stacking and positioning table; 200. stacking robot; 300. feeding mechanism; 400. sheet separation mechanism; 500. centering table; 600. iron-sheet tray station; 700. ventilation-slotted-plate tray station; and 800. defective-sheet tray station.

### Detailed Description of the Embodiments

The present application will be described in further detail below with reference to examples, but examples of the present application are not limited thereto.

### Example 1

As shown in FIG. 1, an automatic stator-core stacking system includes a stacking and positioning table 100, a stacking robot 200, a feeding mechanism 300, a sheet separation mechanism 400, a centering table 500, an iron-sheet tray station 600, and an ventilation-slotted-plate tray station 700; the stacking and positioning table 100 is located in a center of the system; the stacking and positioning table 100, the stacking robot 200, the centering table 500, the sheet separation mechanism 400, and the feeding mechanism 300 are sequentially arranged from inside to outside; the iron-sheet tray station 600 and the ventilation-slotted-plate tray station 700 are located on two sides of the centering table 500;
the stacking and positioning table 100 is configured for positioning and holding stator core(s);
the stacking robot 200 is configured for picking up the ventilation slotted plates, the iron sheets from the ventilation-slotted-plate tray station 700 and the iron-sheet tray station 600 to the centering table 500, respectively; and the stacking robot is configured for picking up (all punched sheets) operation from the centering table 500 to the stacking and positioning table 100 to complete 1/3 of a full-circle stator core stacking;
the feeding mechanism 300 is configured for receiving a stacking material carried by an automated guided vehicle (referred briefly to as AGV) or a forklift;
the segmenting mechanism 400 is configured for separating and transporting silicon steel sheets at a feeding opening to the centering table 500;
the centering table 500 is configured for positioning and sorting all types of punched sheets to ensure that each of the one or more stacking robots 200 picks up from a same position;
the iron-sheet tray station 600 is configured for holding iron sheets; and
the ventilation-slotted plate tray station 700 is configured to containing ventilation slotted plates.

### Example 2

The present Example differs from Example 1 in that the number of the stacking robots 200, the feeding mechanisms 300, the sheet separation mechanisms 400, the centering tables 500, the iron-sheet tray stations 600, and the ventilation-slotted-plate tray stations 700 are three, respectively. The three stacking robots 200, the three feeding mechanisms 300, the three sheet separation mechanisms 400, the three centering tables 500, the three iron-sheet tray stations 600, and the three ventilation-slotted-plate tray stations 700 are evenly distributed around the stacking and positioning table 100.

Ends of the stacking robots 200 are each provided with a suction clamp.

The stacking and positioning table 100 includes a core holding platform, a core positioning tool, and a lifting mechanism. The core holding platform is annular, and is used for holding the stator cores in the stacking process. The core positioning tool is used for stacking and positioning cores to ensure the accuracy for stacking cores. The lifting mechanism is used for driving the core positioning tool to lift so as to adapt to the positioning requirement as the core stacking height changes.

The sheet separation mechanism 400 is provided with a visual detection system and a separation and detection device. The visual detection system is used for detecting the quality of the punched sheets, and for preventing defects, missing stacking, and excessive stacking of the punched sheets, so as to ensure the quality of the product. The separation and detection device is used for separating the positive sheets to prevent occurrence of excessive picking-up and missing picking-up.

The centering table 500 includes an automatic centering and adjusting mechanism and a visual defect detection module. The automatic centering and adjusting mechanism is used for sorting and positioning the incoming material sheets to ensure the position consistency of material picking-up points of the robots, and prevent the punched sheets from interfering with the core positioning tool of the stacking and positioning table 100 when being stacked. The visual defect detection device is used for performing surface defect detection on all incoming material sheets, so that a defective sheet is prevented from being laminated in the stator core, thereby affecting product quality.

A defective-sheet tray station 800 is proximity to the sheet tray station 600 and used for holding defective sheets conveyed from a centering table.

An automatic stator-core stacking method includes the steps of:
step 1: a stacking machine type is determined, a core positioning tool of a stacking and positioning table 100 is replaced, and a suction clamp at an end of each of one or more stacking robots is adjusted, based on a production order requirement;
step 2, a ventilation slotted plate tray for providing with ventilation slotted plates and an inro sheet tray for providing with iron sheets are placed to respective tray stations; positive sheets are placed at a feeding opening, the ventilation slotted plates are placed in the ventilation slotted plate tray, the iron sheets are placed in the iron sheet tray, and a defective sheet tray are placed in a defective-sheet tray station 800;
step 3: the system is started, data of the system is reset, a corresponding machine type program is selected (different parameters are selected according to different products, and the robots are enabled to realize the automatic lamination according to a predetermined program only by preparing materials), and automatic lamination is started;
step 4: the stacking robot 200 is run from a home point to directly above a ventilation-slotted-plate tray station 700, and a visual position detection module integrated on the suction clamp is started to detect position and height information of the ventilation slotted plates.
step 5: the ventilation slotted plates are picked up and placed on one or more centering tables 500 by the one or more stacking robots 200 and the one or more stacking robots 200 exit from the area, and defect detection function of the one or more centering tables (500) is started after centering incoming material sheets through an automatic centering and adjusting mechanism; in response to defect inspection passing, the ventilation slotted plates are picked up by the one or more stacking robots 200 to the stacking and positioning table 100 for stacking; and in response to the defect inspection not passing, the ventilation slotted plates are picked up by the one or more stacking robots 200 to the defective-sheet tray station 800, and repeating step 5 until the one or more stacking robots 200 complete full-circle stacking of a layer of the ventilation slotted plates;
step 6: positive sheet stacks are received by a feeding mechanism 300, and the positive sheets are picked up from the positive sheet stacks and the positive sheets are conveyed to the one or more centering tables 500 by one or more sheet separation mechanisms 400; and the incoming material sheets are centered through the automatic centering and adjusting mechanism by the centering table 500 and then the defect detection function is started; in response to the defect inspection passing, the positive sheets are picked up by the one or more stacking robots 200 to the stacking and positioning table 100 for stacking; and in response to the defect inspection not passing, the positive sheets are picked up by the one or more stacking robots 200 to the defective-sheet tray station 800; next operation is continued by the sheet separation mechanism 400 and the centering table 500 while the one or more stacking robots 200 pick up the incoming material sheets from the centering table 500; and step 6 is repeated until the one or more stacking robots 200 complete stacking of the positive sheets of a stator core;
step 7: the iron sheets are picked up and placed on the one or more centering tables 500 by the one or more stacking robots 200 and the one or more stacking robots exit from the area, and the defect detection function of the one or more centering tables 500 is started after centering the incoming material sheets through the automatic centering and adjusting mechanism; in response to the defect inspection passing, the iron sheets are picked up by the one or more stacking robots 200 to the stacking and positioning table 100 for stacking; and in response to the defect inspection not passing, the iron sheets are picked up by the one or more stacking robots 200 to the defective-sheet tray station 800; and step 7 is repeated until the one or more stacking robots 200 complete full-circle stacking of a layer of the iron sheets;
step 8: steps 5, 6, and 7 are repeated until a segment number of the stator core meets requirements or there is missing in tray punched sheets or the defective sheet tray is full;
step 9: in response to the stator core having a predetermined segment number, the stator core is hoisted from the stacking and positioning table 100 to perform stacking of a next group of stator cores; in response to the tray punched sheets being missed or the defective sheet tray being full, stacking is continuous after reloading material or replacing the tray.

In step 1, it is necessary to calibrate and adjust the stacking and positioning table 100 when producing different production objects. The stacking and positioning table 100 is centered and adjusted, which is prior art and will not be described in detail. For a specific method, reference may be made to Patent Publication No. CN106849533A.

In step 6, the feeding mechanism(s) 300 receive the stacking material carried from the AGV or the forklift.

Advantageous effects of the technical solution are as follows.
1. An automatic stator-core stacking system of the present application employs mechanized and automated equipment to accomplish stacking operations, thereby greatly reducing the personnel demands, liberating workers from repetitive labor operations and changing the workers to more comfortable equipment operators. Meanwhile, the influence of human factors on the product quality is eliminated, and the consistency of the product quality is ensured. Besides, the stacking efficiency can be effectively improved.
2. The present application provides an automatic stator-core stacking system. In the system, the separation, the centering and the stacking of the silicon steel sheets are performed in parallel, so that the stacking time of the stator core is greatly shortened, thereby improving the overall stacking efficiency. The system can realize the stacking operation of the multi-machine stator cores by replacing the positioning device of the stacking and positioning table 100, adjusting the position of the clamp sucker, and replacing the stacking program, thereby improving the processing and manufacturing capability of the stacking system.
3. The present application provides an automatic stator-core stacking system, in which an automatic centering and adjusting mechanism for punched sheets is added to ensure the consistency of the positions of material picking-up points of stacking robot(s) 200 each time, thereby improving the accuracy of the punched sheets in stacking and helping to improve the stacking quality of the stator core. Meanwhile, the requirements of the system on uniformity of incoming materials and consistency of placement positions are reduced. The system can realize the stacking operation of the multi-machine stator cores by replacing the positioning device of the stacking and positioning table 100, adjusting the position of the clamp sucker, and replacing the stacking program, thereby improving the flexibility of the system production and the resource utilization rate.

### Example 3

The present Example differs from Example 2 in that the actions of the stacking robot 200, the feeding mechanism 300, the sheet separation mechanism 400 and the centering table 500 are coordinated and controlled by the controller. This arrangement enables the actions of each part to be coordinated in a unified manner, thereby enabling the actions to cooperate with each other, realizing automation of the actions accurately, and improving the stacking accuracy.

The stacking and positioning table 100 includes a core holding platform, a core positioning tool, a yoke shaping mechanism, and a lifting mechanism. The core holding platform 100 is made of Q235 carbon steel by both a milling process and a grinding process to minimize processing stress and ensure flatness of the platform. The core positioning tool is installed in the center of the lamination platform, is made of high-strength structural steel, and is used for positioning the stator core in a positioning manner of an inner circle in combination with a positioning manner of a piece of the two slots. The yoke shaping mechanism includes nine "semicircular" shaping blocks that are circumferentially uniformly distributed and driven by cylinders. The shaping blocks are radially arranged toward the core and are driven by the cylinders to cooperate with the pigeon slots of the yoke portion of the stator core to achieve the shaping purpose. The lifting mechanism is driven by a servo motor to ensure that the distance of each lifting is accurately controlled, and is guided by four high-strength linear guide rails of a grinding stage to ensure that the straightness of the lifting is reliable. The core positioning tool and the yoke shaping mechanism are mounted on the lifting mechanism by mechanical structures, thereby ensuring positioning and shaping when the cores having any height are stacked. The stacking robot 200 is of the KUKA KR90-R2700 type.

The picking-up of the stacking robot 200 is achieved by a gripper device including an integral frame. A flange, a junction box, a pneumatic reversing valve assembly, a color sensor and a distance sensor above the integral frame are connected to the robot. Three groups of pneumatic sucker assemblies are distributed below the integral frame according to the shape and the size of the punched sheet. A set of rearwardly extending cylinder assemblies and a set of downwardly extending cylinder assemblies are arranged behind the integral frame. The pneumatic reversing valve assemblies are electromagnetic reversing valve assemblies having a function of inputting a control signal and outputting a status signal. The reversing valves are in direct communication with the pneumatic sucker assemblies having an up and down floating mechanism.

The signal acquisition of the visual detection system is four industrial-grade cameras (real-time images are respectively photographed; the industrial control host has a high-speed processing capability; the real-time images are quickly compared with the standard punched images; and a comparison result is given within 0.5 seconds after the photographing, so as to determine whether the punched images have defects such as scratches, paint drops, crimping, and corner missing). Such an arrangement can be used to perform appearance detection on the punched images by the visual detection system, thereby preventing unqualified materials from being stacked, and thus ensuring stacking quality. The separation and detection device includes a vacuum generator, a vacuum chuck, and a weight detection device. The separation and detection device picks up the punched pieces from the stacks through the vacuum sucker, and then it is determined whether there are missing picking-up and excessive picking-up by the weight detection device in the picking-up state. If the above two cases (missing picking-up and excessive picking-up) occur, the system gives an alarm and prompts manual intervention. Meanwhile, the separation and detection device is matched with the magnetic distribution tensioner to ensure the reliability and the stability of the system.

The centering table 500 includes an automatic centering and adjusting mechanism and a visual defect detection module. The automatic centering and adjusting mechanism includes a ball bearing plate, a positioning block on the front side of the bearing plate, and two positioning blocks on the rear side of the bearing plate and driven by a pneumatic push rod. The ball holding plate is used for holding the punched sheets sent from the sheet-splitting detection device. The positioning block on the front side of the bearing plate is used for positioning the punched sheets. The positioning blocks on the rear side of the bearing plate is driven by the air cylinder to push the punched sheets, and cooperate with the positioning block on the front side of the bearing plate, so as to achieve the purpose of accurate positioning. The ball of the ball bearing plate is mainly used for preventing the paint film on the surface of the punched sheet from being damaged during the pushing process. The visual defect detection device includes four industrial cameras on a centering table, a visual system workstation, a display, and a set of visual detection debugging software. The visual defect detection system divides the punched sheets into four detection areas, respectively performs photographing on the punched sheets by four cameras to acquire a real-time image. The visual detection debugging software compares the photographed image with a standard image, and determines whether the punched sheet has defects such as scratches, crimping, corner missing, and depressions.

As described above, the preferred embodiments of the present application are not intended to be limiting in any form, but any simple modification or equivalent variation of the above embodiments in accordance with the teachings of the present application falls within the scope of the present application.

## Claims

1. An automatic stator-core stacking system, **characterized in that** the automatic stator-core stacking system comprises a stacking and positioning table (100), one or more stacking robots (200), one or more feeding mechanisms (300), one or more sheet separation mechanisms (400), one or more centering tables (500), one or more iron-sheet tray stations (600), and one or more ventilation-slotted-plate tray stations (700); the stacking and positioning table (100) is located at a center of the automatic stator-core stacking system; the stacking and positioning table (100), the one or more stacking robots (200), the one or more centering tables (500), the one or more sheet separation mechanisms (400) and the one or more feeding mechanisms (300) are arranged from inside to outside in sequence; and the iron-sheet tray station (600) and the ventilation-slotted-plate tray station (700) are located at two sides of the centering table (500);
the stacking and positioning table (100) is configured for positioning and holding one or more stator cores;
the stacking robot (200) is configured for picking up ventilation slotted plates and iron sheets from the ventilation-slotted-plate tray station (700) and the iron-sheet tray station (600) to the centering table (500), respectively; and the stacking robot is further configured for picking-up operation from the centering table (500) to the stacking and positioning table (100), so as to complete 1/3 of a full-circle stator core stacking;
the feeding mechanism (300) is configured for receiving a stacking material carried by an automated guided vehicle or a forklift;
the sheet separation mechanism (400) is configured for separating and transporting silicon steel sheets at a feeding opening to the centering table (500);
the centering table (500) is configured for positioning and sorting all types of punched sheets to ensure that each of the one or more stacking robots (200) picks up from a same position;
the iron-sheet tray station is configured for holding the iron sheets; and
the ventilation-slotted-plate tray station (700) is configured for containing the ventilation slotted plates.

2. The automatic stator-core stacking system according to claim 1, **characterized in that** the stacking robots (200) comprise three stacking robots, the feeding mechanisms (300) comprise three feeding mechanisms, the sheet separation mechanisms (400) comprise three sheet separation mechanisms, the centering tables (500) comprise three centering tables, the iron-sheet tray stations (600) comprise three iron-sheet tray stations, and the ventilation-slotted-plate tray stations (700) comprise three ventilation-slotted-plate tray stations.

3. The automatic stator-core stacking system according to claim 1, **characterized in that** an end of each of the one or more stacking robots (200) is provided with a suction clamp.

4. The automatic stator-core stacking system according to claim 1, **characterized in that** the stacking and positioning table (100) comprises a core holding platform, a core positioning tool and a lifting mechanism; the core holding platform is configured for holding the one or more stator cores during stacking; the core positioning tool is configured for stacking and positioning the one or more stator cores to ensure stacking accuracy of the one or more stator cores; and the lifting mechanism is configured for driving the core positioning tool to lift so as to adapt to the positioning requirement as a core stacking height changes.

5. The automatic stator-core stacking system according to claim 1, **characterized in that** the sheet separation mechanism (400) is provided with a visual detection system for detecting quality of the punched sheets, and a separation and detection device for separating positive sheets.

6. The automatic stator-core stacking system according to claim 1, **characterized in that** the centering table (500) comprises an automatic centering and adjusting mechanism and a visual defect detection module; the automatic centering and adjusting mechanism is configured for sorting and positioning incoming material sheets to ensure position consistency of material picking-up points of the one or more stacking robots; and the visual defect detection device is configured for performing surface defect detection on the incoming material sheets.

7. The automatic stator-core stacking system according to claim 1, **characterized in that** a defective-sheet tray station (800) is in proximity to the iron-sheet tray station (600) and configured for holding defective sheets conveyed from the centering table.

8. An automatic stator-core stacking method comprising steps of:
step 1, determining a stacking machine type, replacing a core positioning tool of a stacking and positioning table (100), and adjusting a suction clamp at an end of each of one or more stacking robots, based on a production order requirement;
step 2, placing a ventilation slotted plate tray for providing with ventilation slotted plates and a inro sheet tray for providing with iron sheets to respective tray stations; placing positive sheets at a feeding opening, placing the ventilation slotted plates in the ventilation slotted plate tray, placing the iron sheets in the iron sheet tray, and placing a defective sheet tray in a defective-sheet tray station (800);
step 3, starting a system, resetting data of the system, selecting a corresponding model program, and starting automatic lamination;
step 4, running the stacking robot (200) from a home point to directly above a ventilation-slotted-plate tray station (700), and starting a visual position detection module integrated on the suction clamp to detect position and height information of the ventilation slotted plates;
step 5, picking up the ventilation slotted plates and placing the ventilation slotted plates on one or more centering tables (500) by the one or more stacking robots (200) and enabling the one or more stacking robots exit from the area, and starting defect detection function of the one or more centering tables (500) after centering incoming material sheets through an automatic centering and adjusting mechanism; in response to defect inspection passing, picking up the ventilation slotted plates by the one or more stacking robots to the stacking and positioning table (100) for stacking; and in response to the defect inspection not passing, picking up the ventilation slotted plates by the one or more stacking robots to the defective-sheet tray station (800), and repeating step 5 until the one or more stacking robots (200) complete full-circle stacking of a layer of the ventilation slotted plates;
step 6, receiving positive sheet stacks by a feeding device, and picking up the positive sheets from the positive sheet stacks and conveying the positive sheets to the one or more centering tables (500) by one or more sheet separation mechanisms (400); and centering the incoming material sheets through the automatic centering and adjusting mechanism by the centering table (500) and then starting the defect detection function; in response to the defect inspection passing, picking up the positive sheets by the one or more stacking robots (200) to the stacking and positioning table (100) for stacking; and in response to the defect inspection not passing, picking up the positive sheets by the one or more stacking robots (200) to the defective-sheet tray station (800); continuing next operation by the sheet separation mechanism (400) and the centering table (500) while the one or more stacking robots (200) pick up the incoming material sheets from the centering table (500); and repeating step 6 until the one or more stacking robots (200) complete stacking of the positive sheets of a stator core;
step 7, picking up the iron sheets and placing the iron sheets on the one or more centering tables (500) by the one or more stacking robots (200) and enabling the one or more stacking robots exit from the area, and starting the defect detection function of the one or more centering tables (500) after centering the incoming material sheets through the automatic centering and adjusting mechanism; in response to the defect inspection passing, picking up the iron sheets by the one or more stacking robots to the stacking and positioning table (100) for stacking; and in response to the defect inspection not passing, picking up the iron sheets by the one or more stacking robots to the defective-sheet tray station (800); and repeating step 7 until the one or more stacking robots (200) complete full-circle stacking of a layer of the iron sheets;
step 8, repeating steps 5, 6, and 7 until a segment number of the stator core meets requirements or there is missing in tray punched sheets or the defective sheet tray is full;
step 9, in response to the stator core having a predetermined segment number, hoisting the stator core from the stacking and positioning table to perform stacking of a next group of stator cores; in response to the tray punched sheets being missed or the defective sheet tray being full, continuously stacking after reloading material or replacing the tray.

9. The automatic stator-core stacking method according to claim 8, characterize in that in step 1, calibrating and adjusting the stacking and positioning table (100) in response to producing different production objects.

10. The automatic stator-core stacking method according to claim 8, **characterized in that** in step 6, by one or more feeding mechanisms (300), receiving a stacking material carried by an automated guided vehicle or a forklift.
